(19) **Europäisches Patentamt**
**European Patent Office**
**Office européen des brevets**

(11) **EP 3 726 188 B1**

(12) **EUROPEAN PATENT SPECIFICATION**

(45) Date of publication and mention
of the grant of the patent:
**22.11.2023 Bulletin 2023/47**

(21) Application number: **19170369.3**

(22) Date of filing: **19.04.2019**

(51) International Patent Classification (IPC):
**G01F 23/292** *(2006.01)* **G01F 23/00** *(2022.01)*

(52) Cooperative Patent Classification (CPC):
**G01F 23/2928**

(54) **BARREL ARRANGEMENT COMPRISING A BARREL FOR STORING LIQUIDS AND A SENSOR MODULE FOR DETERMINING THE FILLING LEVEL OF A BARREL FILLED WITH A LIQUID**

FASSANORDNUNG MIT EINEM FASS ZUR LAGERUNG VON FLÜSSIGKEITEN UND EINEM SENSORMODUL ZUR BESTIMMUNG DES FÜLLSTANDES EINES MIT EINER FLÜSSIGKEIT GEFÜLLTEN FASSES

DISPOSITIF DE BARIL COMPRENANT UN BARIL POUR STOCKER DES LIQUIDES ET UN MODULE DE CAPTEUR POUR DÉTERMINER LE NIVEAU DE REMPLISSAGE D'UN BARIL REMPLI DE LIQUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.10.2020 Bulletin 2020/43**

(73) Proprietor: **BITA Trading GmbH**
**14163 Berlin (DE)**

(72) Inventor: **Tatievski, Boris**
**14163 Berlin (DE)**

(74) Representative: **Maikowski & Ninnemann**
**Patentanwälte Partnerschaft mbB**
**Postfach 15 09 20**
**10671 Berlin (DE)**

(56) References cited:
| | |
|---|---|
| EP-A1- 1 795 875 | EP-B1- 2 685 226 |
| DE-A1-102007 057 211 | FR-A1- 3 061 285 |
| US-A- 4 782 451 | US-A- 5 257 090 |
| US-A- 5 648 844 | US-A1- 2004 178 916 |
| US-A1- 2018 348 125 | US-B1- 6 259 516 |

EP 3 726 188 B1

## Description

The present invention relates to a barrel arrangement comprising a barrel for storing liquids and a sensor module for determining the filling level of the barrel when filled with a liquid according to claim 1, to a fluid supply support system comprising such a barrel arrangement according to claim 11, and to a method for supporting the supply of a liquid stored in a barrel of such a barrel arrangement according to claim 12.

Prior art discloses different possibilities to monitor the filling level of a tank and to automatically order a fluid stored in such a tank if the fluid level drops under a predefined threshold.

To give an example, US 4,782,451 A discloses a method for ensuring that sufficient liquid is maintained in a liquid reservoir. Thereby, a pressure in the tank is determined and evaluated for calculating the filling level of the tank.

US 6,700,503 B2 discloses a system for monitoring the conditions within a storage tank, wherein the sensor is arranged at the storage tank. The type of sensor is not further specified in this US patent.

WO 2005/066592 A1 discloses a fluid level measurement system, wherein vibrations originating from ultrasonic waves are introduced in a container wall and are propagated at least partially around the container wall. The propagated signal can be used as a measure for determining the fluid level in the container.

US 2005/0289021 A1 discloses an ultrasonic fuel level monitoring system that is intended to be used for detecting the fuel level of a gas tank. Based on the determined fuel level, automatic billing can be performed.

US 8,079,245 B1 describes a fuel measurement system for optimizing the fuel delivery. This system includes a sensor that particularly measures the position of an existing fuel level indicator. Based on this position data, a fuel level in the tank is determined.

US 2010/0001867 A1 discloses a sensor for determining the content level in a fluid holding tank. Thereby, the sensor comprises a magnet that produces a magnetic flux around a housing for an existing content level gauge. The position of this existing content level gauge is then determined by using a Hall Effect sensor transmitter disposed on the housing.

US 2011/0000295 A1 discloses a sensor for sensing the fluid level in a tank, wherein the sensor comprises an upper portion with an upper opening and a lower portion with a lower opening as well as a differential pressure sensor able to determine a differential pressure between the upper and lower openings.

US 5 648 844 A discloses a laser level sensor to be fixed on the cover of a manway of a tank by using screws.

These solutions from prior art make use of various sensing techniques, wherein ultrasonic and pressure sensors are mainly used. Furthermore, they are intended to be used with big tanks. Some of them have a rather complex construction with different parts.

It is an object of the present invention to provide a sensing appliance that can also reliably sense a filling level in a smaller barrel, that can be easily manufactured and that can be easily applied to a barrel in which the filling level is to be determined.

This object is achieved with a sensor module for determining the filling level of the barrel filled with a liquid having the claim elements of claim 1. Such a sensor module comprises a sensor housing, a sensor receiving portion arranged in the sensor housing, and a sensor received within the sensor receiving portion. According to the presently claimed invention, the sensor is a laser sensor.

It turned out that laser sensors are superior with respect to ultrasonic sensors or pressure sensors regarding their ease of use and their reliability. To be more precise, when using ultrasonic sensors, there is a dead zone between the sensor and the surface of a liquid which extends to about 20 cm from the sensor. In this dead zone, no reliable measurements can be done. Thus, an exact volume determination is not possible in this dead zone. Furthermore, if the filling level is rather low, interference occurs of ultrasonic waves being reflected by a surface of the liquid and ultrasonic waves being reflected by the side walls of the barrel, or by a solid bottom of the barrel. This interference results in distortion of received signals and may also result in a complete extinction of an ultrasonic signal. Abnormal measuring values distorting volume measurements are the consequence.

Additionally, also the walls of a barrel serve for distorting measuring values obtained with an ultrasonic sensor if the sensor is positioned approximately 20 cm or closer to the barrel wall.

Whereas these limitations are less important in case of big tanks, they become relevant if the sensor is to be used for sensing the filling level of barrels which typically have a volume of between 50 liters and 250 liters, in particular between 60 liters and 240 liters, in particular between 70 liters and 230 liters, in particular between 80 liters and 220 liters, in particular between 90 liters and 210 liters, in particular between 100 liters and 200 liters, in particular between 60 liters and 220 liters.

Surprisingly, the limitations regarding the arrangement of the sensor with respect to the barrel walls do not exist in case of a laser sensor. Rather, there exist no dead zones and no distortions of measurements even if the filling level of a barrel is very low or if the sensor is located closer than 20 cm to the barrel wall.

The laser sensor senses the filling level of liquid contained in a barrel fully contactless. Neither the sensor module housing nor any other part of the sensor module is in contact with the liquid, the filling level of which is to be determined.

In an embodiment, the sensor module is a single part component, wherein the laser sensor is the only sensor of the sensor module. Thus, in contrast to some of the prior art solutions, it is not necessary to provide two different sensors in order to determine a differential pressure between the locations at which these different sensors are located. Rather, a single sensor gives fully reliable results if the sensor is a laser sensor.

In an embodiment, the laser sensor comprises a source of coherent light (laser light).

In an embodiment, the laser sensor comprises at least one array detector (i.e. a matrix of individual photodetectors).

In an embodiment, the array detector comprises at least 3x3 photodetectors, in particular at least 4x4 photodetectors, in particular at least 5x5 photodetectors, in particular at least 6x6 photodetectors, in particular at least 7x7 photodetectors, in particular at least 8x8 photodetectors, in particular at least 9x9 photodetectors, in particular at least 10x10 photodetectors, in particular at least 11x11 photodetectors, in particular at least 12x12 photodetectors, in particular at least 13x13 photodetectors, in particular at least 14x14 photodetectors, in particular at least 15x15 photodetectors, in particular at least 16x16 photodetectors, in particular at least 20x20 photodetectors. In an embodiment, the array detector comprises 3x3 to 20x20 photodetectors or any other range of photodetectors that can be built up from the precedingly mentioned individual array dimensions.

In an embodiment, the laser sensor comprises exactly or at least two array detectors. Thereby, the individual array detectors can be identical or different in construction. On array detector can serve as main array detector, whereas at least one other array detector can serve as auxiliary array detector.

In an embodiment, the laser sensor comprises a microcontroller controlling the individual components of the laser sensor.

In an embodiment, the laser sensor comprises an optical system comprising at least one of a prism, a lens and a filter. Such an optical system serves for filtering and focusing the light reflected by a liquid in a barrel towards a detector. It enhances the overall signal-to-noise ratio since it provides a detector with a higher signal level.

In an embodiment, the laser sensor comprises a housing, in particular a miniature housing. Such a housing serves for housing the individual components of the laser sensor.

In an embodiment, the laser sensor comprises a source of coherent light, at least one array detector, a microcontroller, an optical system, and a housing, in each case according to the precedingly explained embodiments.

In an embodiment, the sensor comprises a light emitting element and a light detecting element. Thus, the sensor serves both as transmitter and as receiver of laser light, i.e. it is a transceiver of/for laser light. Such a transceiver can also referred to as two-way laser sensor.

In an embodiment, the light-emitting element and the light detecting element are arranged in the same plane adjacent to each other. This enables a slim design of the laser sensor so that it is possible to include the laser sensor into a small sensor receiving portion of the sensor module.

In an embodiment, the sensor receiving portion comprises an external thread. Such an external thread serves for turning the sensor module into a threaded opening of a barrel. Thereby, it is particularly intended that the threaded sensor receiving portion can be turned into an opening of the barrel that is already existing in standard barrels, such as a venting opening. Then, no modifications on a barrel are necessary in order to secure the sensor module to the barrel.

Furthermore, a threaded connection between the sensor module and a barrel serves for a safe fixation of the sensor module to the barrel and enables a defined relative position between the sensor module and the barrel. This facilitates later measurements of the filling level of the liquid contained in the barrel and significantly reduces the risk of measuring errors.

In an embodiment, the external thread has an outer diameter lying in a range between 25 and 28 mm, in particular between 25.5 and 27.5 mm, in particular between 26.0 and 27.0 mm, in particular between 26.2 and 26.5 mm, i.e. around 26.4 mm. If the outer thread is dimensioned in this way, the sensor module can be particularly easy turned into a ¾ inch opening that is by default present in barrels and acts as venting opening. Thus, if the external thread of the sensor module housing is dimensioned in such a manner, no specific modifications of a barrel need to be performed in order to securely fasten the sensor module to this barrel.

In an embodiment, the sensor module comprises additional elements or modules. By these additional elements, additional functionalities of the sensor module can be accomplished. In this embodiment, the sensor module can additionally comprise a microcontroller and/or a rechargeable battery and/or a wireless communication module and/or a memory for storing data and/or a temperature sensor and/or a gyro sensor and/or an LED and/or a USB port and/or an interface to connect a graphic display to the sensor module (such as an HDMI port, a VGA port or display port) and/or an interface (such as a 1-wire, i2s, spi or uart interface) to connect any arbitrary peripherals with a wire or wireless (such as a temperature sensor, a display, an acceleration sensor, a flash memory, a GPS or GLONASS receiver, a connection module) and/or an anti-tamper switch.

A microcontroller can be used to control individual elements of the sensor module and to perform calculations, e.g., a calculation of a liquid mass present in the barrel if the filling level of the barrel, the temperature of the liquid by which the barrel is filled, and the density of the liquid are known.

A rechargeable battery can serve for providing the necessary energy to all elements being present in the sensor module. While generally also non-rechargeable batteries could be installed in the sensor module, the lifetime of such non-rechargeable batteries is limited, typically to several months up to one year. Therefore, the overall lifetime of the sensor module can be increased if it includes a rechargeable battery. In an embodiment, the battery is not only rechargeable, but also replaceable.

A wireless communication module enables a wireless communication between the sensor module and a network access point or a central server so that data gathered by the sensor module can be transmitted in a wireless manner to a central evaluation unit.

A memory for storing data can be used to store data gathered by the sensor module until it can be transmitted by a wireless communication module to a central evaluation unit. Such memory can help in significantly decreasing the energy consumption of the sensor module since it enables to establish a wireless communication to a network access point or a central server only in defined time intervals so that is not necessary to constantly establish a comparatively high energy consuming wireless connection. The memory also enables to store measurement results when the sensor module is temporarily not connected to a network access point. In reality, barrels equipped with such a sensor module are expected to be taken out from a workshop building and to be placed outside during the day. At such a location, the distance to the network access point is often too high and the connection is lost. The memory offers the possibility to store the measurements done during the day. In the evening, the barrels are regularly being taken back into the workshop building where a network connection is established again and the stored results are sent to the network access point.

A temperature sensor is particularly helpful to exactly determine the mass of the liquid contained in a barrel if the volume (due to the filling level measurement) and the density of the liquid are known.

A gyro sensor facilitates the determination whether a barrel to which the sensor module is connected, is arranged in a planner manner or if it is tilted to one side. Such a tilting significantly influences the measuring of the filling level of the barrel.

An LED is helpful in indicating an activity of the sensor module or an operational error to a user. Thereby, different LEDs having different colors (e.g., a red LED and a green LED) can be used to indicate different modes of activity of the sensor module.

A USB port is helpful in reading out the memory or the status of the microcontroller or any other data that is gathered by other elements of the sensor module. It can further be used for updating a firmware of the sensor module, for adding new functionality, for optimizing the existing functionality or for fixing of bugs. Furthermore, a USB port can be used for particularly easy charging a rechargeable battery present in the sensor module.

An interface for connecting peripherals like a graphic display enables the possibility to connect a graphic display to the sensor module and to output visual information or data. Then, specific information gathered by the sensor module can be easily displayed to the user.

As an example, a curve of the filling level of the barrel to which the sensor module is connected can be displayed on the graphic display over time. Furthermore, information on temperature and data transmission events can also be displayed on the graphic display.

In an embodiment, electronic ink (e-ink) displays are used. E-Ink displays are characterized by a very small energy consumption, thus serving for a long lifetime of a battery driven device like the sensor module.

An anti-tamper switch can be used to help detecting an unauthorized opening of the sensor module. Such unauthorized opening of the sensor module can indicate an attempt of manipulating the sensor module in a non-authorized way. If such attempt is tracked, the data gathered with the sensor module can be evaluated with particular precaution.

In an embodiment, the sensor module comprises a microcontroller or microprocessor that is specifically adapted to apply an optimization to the obtained measured raw data. In an embodiment, the optimization is performed by applying multiple mathematical operations, e.g., at least one of average calculation, normalization and a polynomial approximation, in particular a third-order polynomial approximation, to the measured raw data in order to obtain a polynomial function representing the measured data. By such an approximation, the deviations between the measured values and the real values can be significantly reduced. The following equations are appropriate for such an approximation:

1.

$$y = b + c_1{}^*x$$

(first-order polynomial approximation)
2.

$$y = b + c_1{}^*x + c_2{}^*x^2$$

second-order polynomial approximation
3.

$$y = b + c_1{}^*x + c_2{}^*x^2 + c_3{}^*x^3$$

(third-order polynomial approximation)

An aspect of the present invention relates to a barrel arrangement comprising a barrel for storing liquids. According to this aspect of the invention, the barrel arrangement comprises a sensor module according to the preceding explanations. Thereby, the sensor module is connected to the barrel. As explained above, the sensor module comprises a sensor housing, a sensor receiving portion arranged in the sensor housing, and a laser sensor received within the sensor receiving portion. The sensor module is connected in such a manner to the barrel that the laser sensor faces an interior of the barrel. Thus, it is possible to irradiate a laser beam emitted by the laser sensor directly onto liquid contained in the barrel. The sensor module is turned in a venting opening of the barrel that is present in the barrel by default, and comprises at least one bore through which air can flow from a first side of the sensor module to a second side of the sensor module so that air can penetrate the sensor module and can flow from an outside of the barrel arrangement to an interior of the barrel to allow that liquid can be drawn from the barrel and air can flow into the barrel in order to replace the withdrawn liquid.

In an embodiment, the barrel comprises a threaded opening into which the sensor module is turned in. Thereby, the threaded opening is typically an opening that is present in the barrel by default. It can, e.g., be a venting opening of the barrel. In another embodiment, the opening is a filling opening of the barrel.

In an embodiment, the bore through which air can pass through the sensor module is occupied by a screw which comprises at least one ventilating hole allowing air to circulate. Then, air can still pass through the bore from one side of the sensor module to another side of the sensor module, in particular into an interior of the barrel. Such an arrangement particularly reduces or avoids the risk of an undesired contamination of an interior of the barrel through contaminants passing through the bore. In an embodiment, such a screw is present if the sensor module or the barrel equipped with the sensor module is inactive or is transported. The screw is typically removed if the sensor module or the barrel equipped with the sensor module is in use.

In an embodiment, the opening into which the sensor module is turned in is arranged on an upper side of the barrel. Then, it is particularly easy to place the sensor module into the opening. Furthermore, the sensor module can then particularly easy sense the filling level of the liquid contained in the barrel since it can be placed directly above the upper surface of such liquid (i.e., it is not necessary to direct the laser beam in an angled manner onto an upper surface of the liquid contained in the barrel).

In an embodiment, the barrel is a standard barrel having a volume lying in a range between 50 liters and 250 liters, in particular between 60 liters and 240 liters, in particular between 70 liters and 230 liters, in particular between 80 liters and 220 liters, in particular between 90 liters and 210 liters, in particular between 100 liters and 200 liters, in particular between 60 liters and 220 liters.

In an embodiment, the barrel is at least partly filled with a liquid that is typically used in a garage for maintenance of vehicles. Thus, the liquid can be oil for vehicles, in particular motor oil for vehicles of gear oil for vehicles, and/or a lubricant for vehicles, and/or a fuel for vehicles. Thereby, the vehicles can be land vehicles, water vehicles or other vehicles. In an embodiment, the vehicles for which the liquid is intended are land vehicles such as cars or motorbikes.

An aspect of the present invention relates to a fluid supply support system comprising at least one barrel arrangement according to the preceding explanations and a central server located remote from the at least one barrel arrangement. As previously explained, the barrel arrangement comprises a barrel for storing liquids and a sensor module for determining the filling level of the barrel when the barrel is filled with a liquid. The sensor module comprises a sensor housing, a sensor receiving portion arranged in the sensor housing, a wireless communication module, and a laser sensor received within the sensor receiving portion, wherein the sensor module is turned in a venting opening of the barrel and comprises at least one bore through which air can flow from a first side of the sensor module to a second side of the sensor module so that air can penetrate the sensor module and can flow from an outside of the barrel arrangement to an interior of the barrel to allow that liquid can be drawn from the barrel and air can flow into the barrel in order to replace the withdrawn liquid.

Thereby, the sensor module and the central server are arranged and designed to communicate with each other by means of the wireless communication module. Thus, no wiring connection between the sensor module and the central server is necessary.

The wireless communication can be established directly between the wireless communication module and the central server or via typical network access appliances. To give an example, the wireless communication module can send data to a wireless transmitting module located near to the sensor module, wherein this wireless communication module can itself transmit the received data to the central server, wherein generally both wireless communication or a wire-based communication can be used. A data transfer over the internet is particularly appropriate. Such a fluid supply support system can be used to facilitate the fluid supply to different points of consumption. It enables monitoring the filling level of one or more barrels located at one or more locations, wherein general data on liquid consumption and on consumer habits as well as on the potential necessity that a certain point of consumption needs to stockpile liquid stocks can be gathered. Furthermore, it is possible to use the gathered data for feeding an automatic billing system so that the liquid consumption can be automatically billed by a central billing unit or department.

Such a fluid supply support system is a prerequisite of a method for supporting the supply of a liquid stored in a barrel that will be explained in the following in more detail.

In an aspect, the present invention relates to such a method for supporting the supply of a liquid stored in a barrel of a barrel arrangement according to the preceding explanations at a point of consumption. This method comprises the steps explained in the following.

In a first step, the filling level of a barrel filled with a liquid is measured at different points in time. These points in time can be spaced apart from each other in regular or irregular intervals. The barrel forms part of a barrel arrangement comprising a sensor module for determining the filling level of the barrel. The sensor module comprises a sensor housing, a sensor receiving portion arranged in the sensor housing, a wireless communication module, and a laser sensor received within the sensor receiving portion, wherein the sensor module is turned in a venting opening of the barrel and comprises at least one bore through which air can flow from a first side of the sensor module to a second side of the sensor module so that air can penetrate the sensor module and can flow from an outside of the barrel arrangement to an interior of the barrel to allow that liquid can be drawn from the barrel and air can flow into the barrel in order to replace the withdrawn liquid.

Afterwards, data comprising at least an identification of the barrel and the measured filling level (i.e., the measured distance between the laser sensor and the liquid surface) is sent via a wireless communication module to a central server. The identification of the barrel can be, e.g., a specific number or an alphanumeric identifier of the barrel that allows a unique identification of the barrel. The unique identifier can be used to decode the location of the barrel by looking up corresponding data stored in a database to which the central server has access. The identification can also be, e.g., non-unique number together with unique location data. Then, non-ambiguous identification of the barrel is possible, too.

In a further step, the volume of liquid present in the barrel is calculated based on the measured filling level. The calculation can be done, e.g., on the central server. Typically, the server has information about the dimensions of the barrel and can calculate the volume from the dimensions and the data received from the sensor. If the calculation is done on a central server, the calculation algorithm can be optimized without changing the firmware of the laser sensor. In a further step, further liquid (that corresponds to the liquid being present in the barrel) is automatically ordered from a liquid vendor if the calculated liquid volume in the barrel is below a preset threshold. Thereby, it is possible to set the threshold according to the needs of a user. Such a method significantly facilitates the liquid supply to a plurality of points of consumption. Whereas similar concepts are already known in case of bigger tanks, they have not been applied so far to liquids stored in barrels, in particular not to liquids stored in barrels having volumes as indicated above. Furthermore, the method is much more reliable than methods known from prior art since the laser sensor gives more reliable results than sensing methods described in prior art, as already explained above.

In an embodiment, at least one of the following additional data is sent from the sensor module to the central server: the current temperature, an angle (tilt) of the barrel, a time stamp, a battery level, and a unique identification of the sensor.

In an embodiment, the method is intended to be used for supplying garages or workshops performing maintenance work on vehicles with liquids that are typically used for such maintenance works on vehicles, in particular vehicle oils, lubricants and fuels, e.g., as those listed above.

In an embodiment, the data sent to the central server additionally comprises data on the location of the barrel and/or data on the type of liquid stored in the barrel and/or data on the volume of liquid taken from the barrel in a defined time period and/or a number of barrel opening events and/or a number of sensor module opening events. If some of this additional data is transmitted to the central server, not only the drum location and the current liquid level can be determined, but also liquid consumption over time, a potential barrel loss, a potential barrel opening, and a potential sensor module opening can be monitored. This facilitates monitoring the overall liquid consumption process at the point of consumption.

In particular, if the liquid filling level or liquid volume, respectively, determined by the sensor module increases at a certain point in time although no liquid has been purchased from an authorized liquid vendor, this indicates that the liquid present in the barrel has been mixed with another liquid by the user of the barrel so that the barrel no longer contains the liquid that it should contain. Thus, the method is also helpful in ensuring the quality of a specific liquid contained in a barrel. It can thus help fulfilling specific quality management criteria that might be necessary in order to obtain certification on the processes performed at the point of consumption.

In an embodiment, the data to be sent from the barrel arrangement of the central server is stored in the memory of the sensor module until a communication connection between the sensor module and the central server is established. Such a communication connection can be established in predefined time intervals, e.g., once a day, once a week, or once a month. This reduces the energy consumption of the sensor module and thus increases the overall lifetime of the sensor module. The memory further guarantees that now gathered data is lost, even in case that a scheduled communication connection between the sensor module and the central server could not be established (e.g., due to connectivity problems). Then, the stored data can be easily transmitted when the communication connection is successfully established for the next time according to the schedule.

In an embodiment, an optimization of the obtained measured raw data is performed. In an embodiment, the optimization is performed by applying multiple mathematical operations, e.g., at least one of average calculation, normalization and a polynomial approximation, in particular a third-order polynomial approximation, to the measured raw data in order to obtain a polynomial function representing the measured data. By such an approximation, the deviations between the measured values and the real values can be significantly reduced. The following equations are appropriate for such an approximation:

1.

$$y = b + c_1 {}^* x$$

(first-order polynomial approximation)

2.

$$y = b + c_1 {}^* x + c_2 {}^* x^2$$

second-order polynomial approximation)

3.

$$y = b + c_1 {}^* x + c_2 {}^* x^2 + c_3 {}^* x^3$$

(third-order polynomial approximation)

In an embodiment, the data received by the central server is further evaluated, namely to predict a point in time at which the volume of liquid present in the barrel presumably drops below the preset threshold. Based on such prediction, further liquid can be automatically ordered in a predefined time window prior to the predicted point in time so that it is not necessary to wait for an actual drop of liquid volume under the preset threshold. Rather, a refill of the barrel can already take place if the liquid volume is above the threshold but is expected to drop below the threshold with in the predefineable time window. Thereby, the predefineable time window can be, in an embodiment, a time window of 1 day to 1 month, in particular 2 days to 3 weeks, in particular 3 days to 2 weeks, in particular 4 days to 1 week.

By such a prediction, a more flexible liquid supply to different points of consumption is possible. If barrel arrangements as described above are present at plurality of points of consumption distributed over a larger regional area, it is possible to supply the individual points of consumption with additional liquid already if the preset threshold is not yet reached but is expected to be reached in the predefined time window, e.g., within the next week. This significantly reduces the amount of supply tours to be made by the liquid vendor so that the overall costs are also reduced. This makes it possible for the liquid vendor to offer the liquid at a lower price or to otherwise invest the saved money.

Further details of aspects of the present invention will be explained with respect to embodiments and accompanying Figures. In the Figures:

Figure 1A    shows an embodiment of a sensor module housing in its closed state;

Figure 1B    shows the sensor module housing Figure 1A in its open state;

Figure 2A    shows an embodiment of a sensor receiving portion with a laser sensor from its upper side in a perspective view;

Figure 2B    shows the sensor receiving portion with laser sensor of Figure 2A from its lower side;

Figure 2C    shows a top view onto the sensor receiving portion of Figure 2A;

Figure 2D    shows a cross-sectional view through the sensor receiving portion of Figure 2A along the dashed line D-D of Figure 2C;

Figure 3A    shows a perspective view on the sensor receiving portion of Figure 2A with an additional top plate of an example not part of the present invention;

Figure 3B    shows a partially cut view through the sensor receiving portion with top plate of Figure 3A;

Figure 3C    shows a bottom view of the sensor receiving portion with top plate of Figures 3A and 3B;

Figure 4    shows an embodiment of a barrel arrangement;

Figure 5    shows the results of testing the influence of different orientations of a laser sensor with respect to a barrel wall;

Figure 6A    shows the raw data of different filling level measurements performed with a laser sensor;

Figure 6B    shows third-order polynomial approximations of the raw data of Figure 6A;

Figure 7A    shows the raw data of different filling level measurements performed with a laser sensor covered with a glass plate;

Figure 7B    shows third-order polynomial approximations of the raw data of Figure 7A;

Figure 8A    shows the raw data of different filling level measurements performed with a laser sensor covered with a glass plate covered itself with oil; and

Figure 8B    shows third-order polynomial approximations of the raw data of Figure 8A.

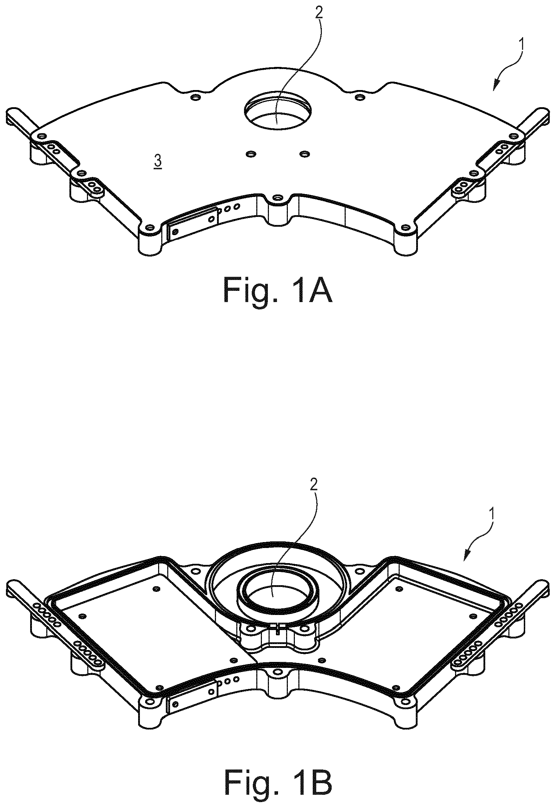

Figure 1A shows a sensor housing 1 comprising an opening 2 into which a sensor receiving portion can be inserted. The sensor housing 1 has a cover plate 3 covering its upper side.

Figure 1B shows the sensor housing 1 of Figure 1A in its open state. In this and all following Figures similar elements will be referred to with the same numeral references.

The interior of the sensor housing 1 provides sufficient space for a (rechargeable) battery, a microcontroller or microprocessor and further appliances that are useful for the operation of a sensor module comprising such a sensor housing 1.

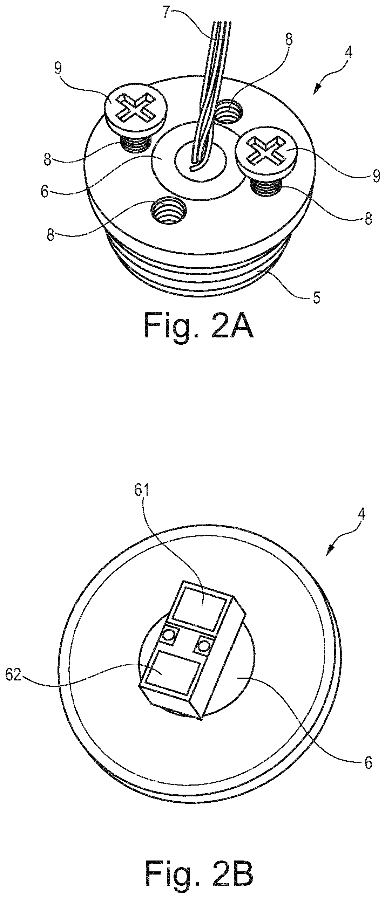

Figure 2A shows a sensor receiving portion 4 that is intended to be inserted into the opening 2 of the sensor housing 1 of Figures 1A and 1B. This sensor receiving portion 4 has an external thread 5 by means of which a sensor module comprising the sensor receiving portion 4 and the sensor housing 1 can be connected via a threaded connection to a barrel.

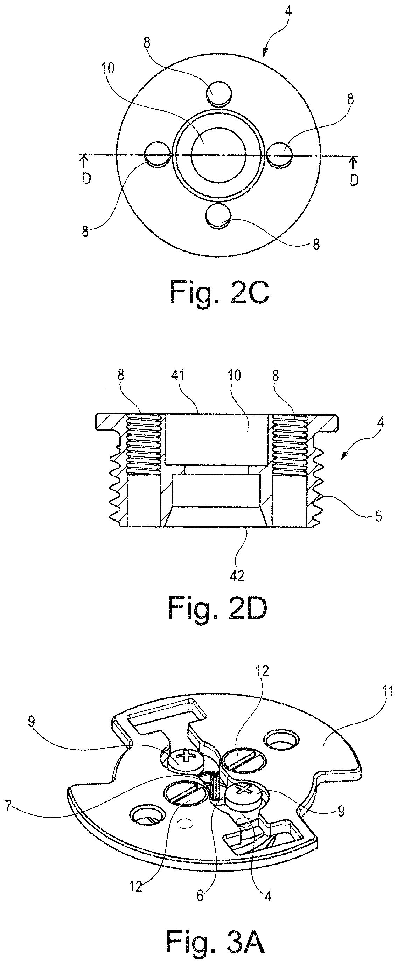

The sensor receiving portion 4 comprises a laser sensor 6 that is inserted into a central portion of the sensor receiving portion 4. The laser sensor 6 comprises electric lines 7 by which it can be controlled, supplied with energy and read out. The sensor receiving portion 4 which is shaped in the form of metal bolt in the embodiment shown in Figure 2A, comprises four bores 8, two of which are occupied by screws 9. These bores 8 serve on the one hand for fixation of a cover plate (cf. in this respect Figures 3A to 3C for more details) and on the other hand for allowing passing air through them. Thus, it is possible for air to pass from a first side of a sensor module comprising the sensor receiving portion 4 to a second side of the sensor module. In doing so, it is possible to allow for venting a barrel to which an according sensor module is connected. This is particularly helpful if the sensor module is screwed into a venting opening of the barrel. Then, the venting opening still fulfils is venting functionality but additionally serves for receiving a sensor module comprising the sensor receiving portion 4 with the laser sensor 6.

Figure 2B shows the sensor receiving portion 4 of Figure 2A from its bottom side. The laser sensor 6 comprises an array-shaped laser diode 61 and a light detecting array 62 that are arranged in one plane adjacent to each other. The laser diode 61 serves as light emitting element. The light detecting array 62 serves as light detecting element and enables a detection of laser light emitted from the laser diode 61. In operation, the laser diode 61 emits laser light that is irradiated onto the surface of a liquid being present in a barrel to which the sensor module is connected, wherein the sensor receiving portion 4 forms part of the sensor module. The laser light is then reflected by the surface of the liquid, wherein the reflected laser light detected by the detecting array 62. Thus, the laser light travels in a first direction away from the laser sensor and in a second direction towards the laser sensor. Therefore, the laser sensor 6 can also denoted as two-way laser sensor (laser transceiver).

Figure 2C shows a top view of the sensor receiving portion 4 of Figure 2A. Thereby, the laser sensor 6 is not yet inserted into a central opening 10 of the sensor receiving portion 4. Regarding the further elements of the sensor receiving portion 4, reference is made to the explanations given with respect to Figure 2A.

Figure 2D shows a cross-sectional view through the sensor receiving portion 4 of Figure 2C along the line D-D. It can be well seen in this cross-sectional view that the bores 8 provide a connection between a first side 41 and a second side 42 of the sensor receiving portion 4. Thereby, only a part of the bores 8 that faces the first side 41 of the sensor receiving portion 4 has an internal thread into which a screw can be turned in.

The external thread 5 of the sensor receiving portion 4 has an outer diameter of approximately 26.4 mm and thus can be turned into a 3/4 inch opening of a barrel.

Figure 3A shows the sensor receiving portion 4 of Figure 2A with an additional cover plate 11 that is connected to the sensor receiving portion 4 by two screws 12 that are turned into corresponding bores 8 of the sensor receiving portion 4 in an example not part of the present invention; (cf. Figure 2A for more details). The cover plate 11 serves for a tight connection of the sensor receiving portion 4 to the sensor housing 1 (cf. Figures 1A and 1B in this respect). The cover plate 11 is a metal plate having a shape facilitating the fixation of the sensor receiving portion 4 to the sensor housing 1.

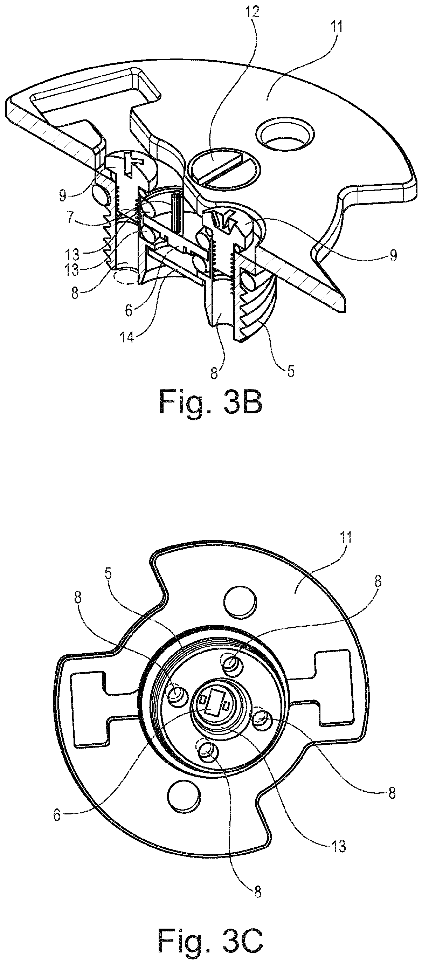

Figure 3B is a partially cut perspective view of the sensor receiving portion 4 with attached cover plate 11 as shown in Figure 3A. Here, the arrangement of the laser sensor 6 can particularly well be seen. The laser sensor 6 is located between two gaskets 13 that serve for a safe fastening of the laser sensor 6 within the sensor receiving portion 4. A glass plate 14 is located below the laser sensor 6 that serves for protecting the laser sensor 6 against the liquid contained in a barrel in which the laser sensor 6 is intended to measure the filling level as well as against other environmental contaminants that could otherwise impair the functionality of the laser sensor 6.

Figure 3C finally shows the sensor receiving portion 4 with attached cover plate 11 in a bottom view. Here, one can directly see the laser sensor 6 from its bottom side. Regarding the other elements, reference is made to the explanations given above with respect to the preceding Figures.

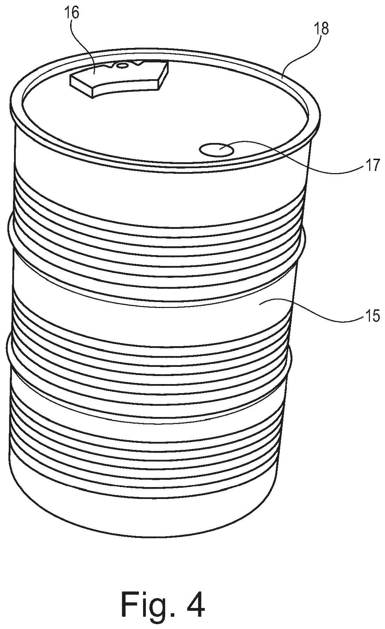

Figure 4 shows an embodiment of a barrel arrangement comprising a standard 200-liter barrel 15 and a sensor module 16 connected to the barrel on a top side thereof. Thereby, the sensor module 16 is turned into a venting opening of the barrel 15. This venting opening is a ¾ inch opening being present in the barrel 15 by default in its top region. It is located opposite a 2-inch filling opening 17 that is not covered by the sensor module 16. The sensor module 16 has a very slim overall shape so that it does not protrude over a rim 18 of the barrel 15. Thus, if several barrels are stockpiled one above each other, the sensor module 16 will not impair such stockpiling.

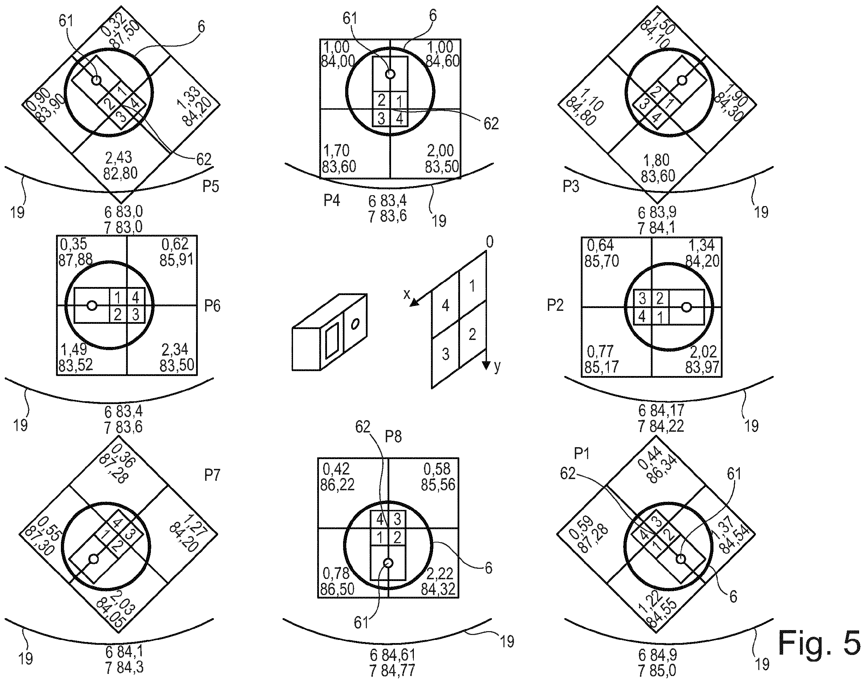

Figure 5 shows the experimental setup and the results of testing an influence of the relative position of the laser sensor 6 with respect to a barrel wall 19, such as a wall of the barrel 15 shown in Figure 4.

The laser sensor 6 is designed as already explained with respect Figure 2B. Thus, it has a laser diode 61 and a detecting array 62. This detecting array is a 16 × 16 detecting array. The laser sensor 6 can be turned around an axis such that it can be present in eight different positions P1 to P8 with respect to the barrel wall 19. In position P8, it is arranged at an angle of 0°, i.e. the laser diode 61 is arranged close to the barrel wall 19, and the detecting array 62 is arranged remote from the barrel wall 19. In position P1, the laser sensor 6 is turned around 45° with respect to its position P8. In position P2, it is turned around 90°, in position P3 around 135°, in position P4 around 180°, in position P5 around 225°, in position P6 around 270° and in position P7 around 315° always with respect to its position P8.

For each position P1 to P8, the intensity of different array areas of the detecting array 62 as well as the concrete measuring value of this array area was determined. Thereby, the following array areas were chosen:

1. x0:y0 - x7:y7 (8 × 8 array)
2. x8:y0 - x15:y7 (8 × 8 array)
3. x8:y8 - x15:y15(8 × 8 array)
4. x0:y8 - x7:y15 (8 × 8 array)
6. x6:y6 - x9:y9 (4 × 4 array)
7. x7:y7 - x10:y10 (4 × 4 array)

These measurements were performed for one and the same level of oil being present in the barrel.

The upper number in Figure 5 for arrays 1, 2, 3, and 4 indicates the detected signal strength (in arbitrary units). The lower number in Figure 5 for arrays 1, 2, 3, and 4 indicates the measured distance to the surface of oil present in the barrel (in cm). For arrays 6 and 7 only the measured distance to the surface of oil present in the barrel is indicated.

The best results could be achieved at position P4 in which the laser diode 61 is located as close as possible to a central area of the barrel and the detecting array 62 is located as close as possible to the barrel wall 19. In this position, the best intensity distributions were obtained. In addition, the measuring values corresponded best to the real filling level that was manually determined for comparison reasons.

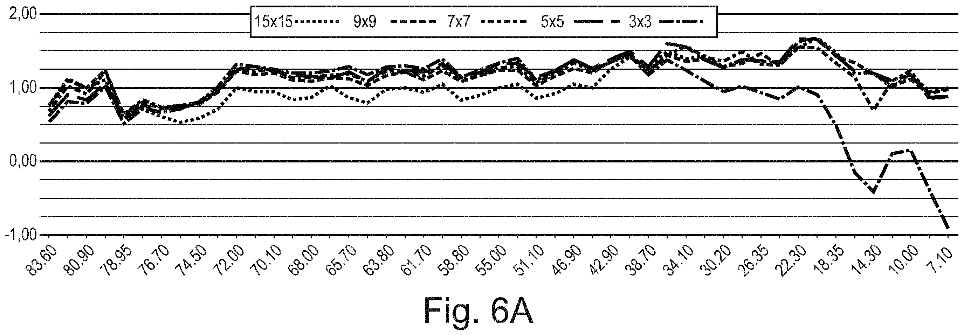

Figure 6A shows the results of a plurality of measurements performed with the laser sensor 6 oriented in position P4 according to Figure 5 in a barrel filled with oil. Thereby, the filling level of the barrel was always increased or decreased after a measurement by pumping oil into the barrel or pumping oil out of the barrel.

To evaluate if all areas of the 16 × 16 detecting array should be used or if more reliable measurements could be achieved when using a subset of the detecting array, five different central detecting sub areas of 3 × 3, 5 × 5, 7 × 7, 9 × 9 and 15 × 15 arrays have been used. Thus, one curve in Figure 6A represents the measuring results using a central 3x3 detecting array, the next curve represents the measuring results for a central 5 × 5 detecting array etc. For each detecting array 20 consecutive measurements were made and averaged. These 20 consecutive measurements took approximately one second. Thus, for all five detecting areas a cycle of detecting the filling level in the barrel was accomplished within five seconds.

Figure 6A shows relative results, i.e., a value of 1.0 indicates that the exact filling level was determined, wherein higher values indicate a slightly too high measured filling level and values below 1 indicate a slightly too low measured filling level.

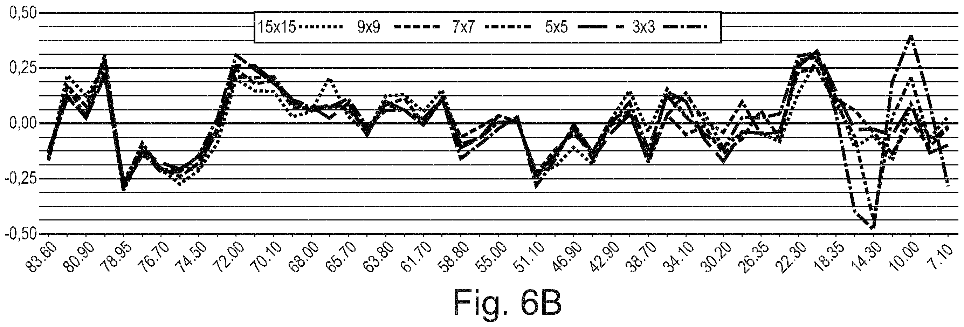

The raw data of Figure 6A indicates certain deviations between the measured values and the real values. These deviations can be significantly reduced if a third-order polynomial approximation is applied to the measured values. The according curves representing this polynomial approximation only slightly fluctuate around the zero line. This is shown in Figure 6B. Thus, by such third-order polynomial approximation, the measured values are optimized so that a deviation between the optimized measured values and the real filling level is smaller than a deviation between the raw measuring values and the real filling level.

All in all, it was possible to measure the filling level of the barrel with average error of 1.5 mm which is significantly better than the results obtained with any other measuring method.

In further experiments, it was tested whether a glass cover or glass cover having an oil film deposited thereon might impair the measuring results.

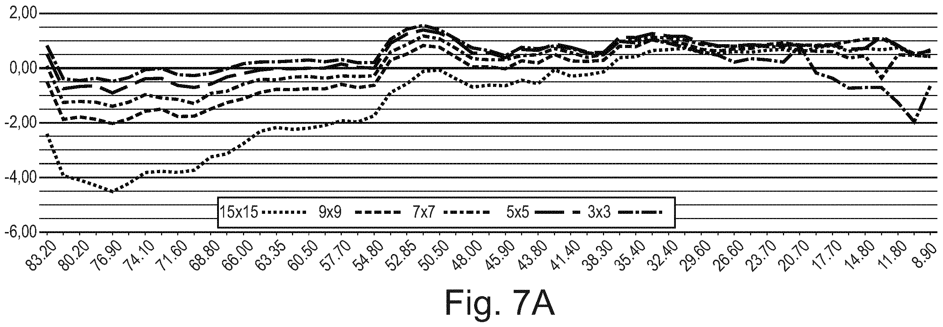

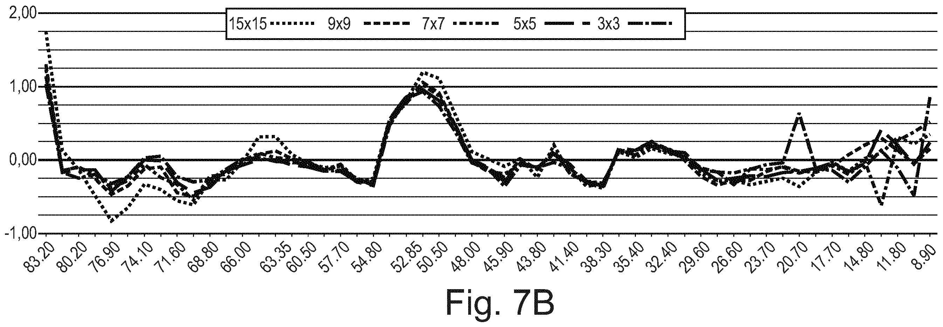

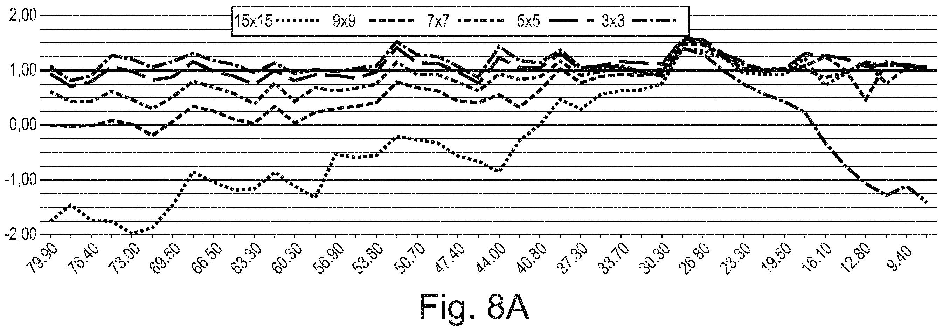

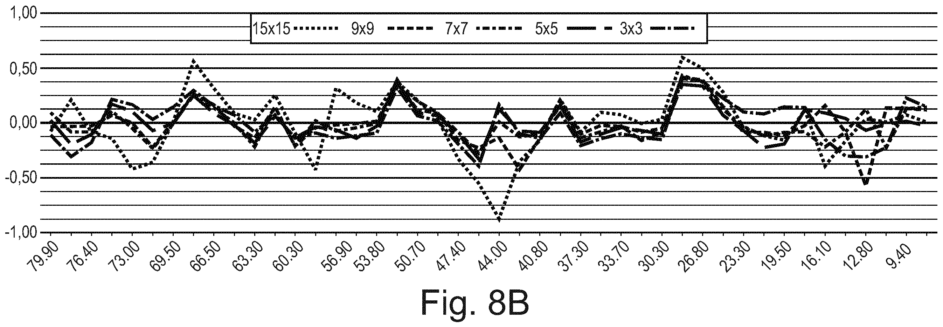

The according results are depicted in Figures 7A and 7B with respect to a protective glass covering the laser sensor and in Figures 8A and 8B for a protective glass covered with an oil film covering the laser sensor. Thereby, Figures 7A and 8A represent once again raw data (like Figure 6A), wherein Figures 7B and 8B represent third-order polynomial approximations of the raw data (like Figure 6B).

It can be seen that also in case of a glass covering or a glass covering covered with oil, the overall deviations are decreased in case of applying a third-order approximation to the measured raw data. Thus, even though the measuring error appears to be somewhat higher in case of the glass covering the laser sensor or the glass covered with oil covering the laser sensor, such a protective element can still be applied since the mathematical optimization of the obtained data reduces the deviations between the measured values and the real values of the filling level. Thus, this optimization enhances the overall quality of the measuring method.

**Claims**

1. Barrel arrangement comprising a barrel for storing liquids and a sensor module (16) for determining the filling level of the barrel when filled with a liquid, wherein the sensor module (16) is connected to the barrel (15) and comprises a sensor housing (1), a sensor receiving portion (4) arranged in the sensor housing (1), and a laser sensor (6) received within the sensor receiving portion (4), wherein the laser sensor (6) faces an interior of the barrel (15), **characterized in that** the sensor module (16) is turned in a venting opening of the barrel (15) that is present in the barrel (15) by default, wherein the sensor module (16) comprises at least one bore (8) through which air can flow from a first side (41) of the sensor module (16) to a second side (42) of the sensor module (16) so that air can penetrate the sensor module (16) and can flow from an outside of the barrel arrangement to an interior of the barrel (15) to allow that liquid can be drawn from the barrel (15) and air can flow into the barrel (15) in order to replace the withdrawn liquid.

2. Barrel arrangement according to claim 1, **characterized in that** the sensor (6) comprises a light emitting element (61) and a light detecting element (62).

3. Barrel arrangement according to claim 2, **characterized in that** the light emitting element (61) and the light detecting element (62) are arranged in the same plane adjacent to each other.

4. Barrel arrangement according to claim 2 or 3, **characterized in that** the light emitting element (61) is a laser diode and the light detecting element (62) is a detecting array, wherein the laser diode (61) is located as close as possible to a central area of the barrel and the detecting array (62) is located as close as possible to a barrel wall (19).

5. Barrel arrangement according to any of the preceding claims, **characterized in that** the sensor receiving portion (4) comprises an external thread (5) by means of which the sensor module (16) is turned into a threaded opening of the barrel (15).

6. Barrel arrangement according to claim 5, **characterized in that** the external thread (5) has an outer diameter lying in a range between 25 and 28 mm.

7. Barrel arrangement according to any of the preceding claims, **characterized in that** it comprises at least one of a microcontroller, a rechargeable battery, a wireless communication module, a memory for storing data, a temperature sensor, a gyro sensor, an LED, an USB port, an interface for connecting a graphic display, and an anti-tamper switch.

8. Barrel arrangement according to any of the preceding claims, **characterized in that** the venting opening of the barrel (15) into which the sensor module (16) is turned in is arranged on an upper side of the barrel (15).

9. Barrel arrangement according to any of the preceding claims, **characterized in that** the laser sensor comprises at least one array detector comprising at least 3x3 photodetectors.

10. Barrel arrangement according to any of the preceding claims, **characterized in that** the barrel (15) is at least partly filled with a liquid chosen from the group consisting of oil for vehicles, motor oil, gear oil, lubricants for vehicles, and fuels for vehicles.

11. Fluid supply support system comprising at least one barrel arrangement according to any of the preceding claims and a central server located remote from the at least one barrel arrangement, wherein the sensor module (16) further comprises a wireless communication module, wherein the sensor module (16) and the central server are arranged and designed to communicate with each other by means of the wireless communication module.

12. Method for supporting the supply of a liquid stored in a barrel of a barrel arrangement according to any of claims 1 to 10 at a point of consumption, comprising the following steps:

   a) measuring the filling level of the barrel (15) filled with a liquid at different points in time,
   b) sending data comprising at least an identification of the barrel (15) and the measured filling level via the wireless communication module to a central server,
   c) calculating the volume of liquid present in the barrel (15) based on the measured filling level,
   d) automatically ordering further liquid from a liquid vendor if the calculated volume is below a preset threshold.

13. Method according to claim 12, **characterized in that** the data sent to the central server additionally comprise at least one of a location of the barrel (15), a type of liquid stored in the barrel (15), a volume of liquid taken from the barrel (15) in a defined time period, a number of barrel opening events, and a number of sensor module opening events.

14. Method according to claim 12 or 13, **characterized in that** the data to be sent from the barrel arrangement to the central server is stored in a memory of the sensor module (16) until a communication connection between the sensor module (16) and the central server is established.

15. Method according to any of claims 12 to 14, **characterized in that** the data received by the central server is evaluated to predict a point in time at which the volume of liquid present in the barrel (15) presumably drops below the preset threshold, wherein further liquid is automatically ordered in a predefineable time window prior to the predicted point in time.

**Patentansprüche**

1. Fassanordnung, aufweisend ein Fass zum Lagern von Flüssigkeiten sowie ein Sensormodul (16) zum Bestimmen des Füllstands des Fasses, wenn es mit einer Flüssigkeit gefüllt ist, wobei das Sensormodul (16) mit dem Fass (15) verbunden ist und ein Sensorgehäuse (1), einen Sensoraufnahmeabschnitt (4), der in dem Sensorgehäuse (1) angeordnet ist, und einen Lasersensor (6), der in dem Sensoraufnahmeabschnitt (4) aufgenommen ist, aufweist, wobei der Lasersensor (6) einem Inneren des Fasses (15) zugewandt ist,
   **dadurch gekennzeichnet,**
   **dass** das Sensormodul (16) in eine Belüftungsöffnung des Fasses (15) gedreht ist, die standardmäßig in dem Fass (15) vorhanden ist, wobei das Sensormodul (16) zumindest ein Loch (8) aufweist, durch das Luft von einer ersten Seite (41) des Sensormoduls (16) zu einer zweiten Seite (42) des Sensormoduls (16) strömen kann, so dass Luft durch das Sensormodul (16) hindurchtreten kann und von einer Außenseite der Fassanordnung zu einem Inneren des Fasses (15) strömen kann, um zu ermöglichen, dass Flüssigkeit aus dem Fass (15) abgezogen werden kann und Luft in das Fass (15) strömen kann, um die abgezogene Flüssigkeit zu ersetzen.

2. Fassanordnung nach Anspruch 1, **dadurch gekennzeichnet, dass** der Sensor (6) ein lichtemittierendes Element (61) und ein lichtdetektierendes Element (62) aufweist.

3. Fassanordnung nach Anspruch 2, **dadurch gekennzeichnet, dass** das lichtemittierende Element (61) und das lichtdetektierende Element (62) in derselben Ebene benachbart zueinander angeordnet sind.

4. Fassanordnung nach Anspruch 2 oder 3, **dadurch gekennzeichnet, dass** das lichtemittierende Element (61) eine Laserdiode ist und das lichtdetektierende Element (62) ein Detektor-Array ist, wobei die Laserdiode (61) so nahe wie möglich an einem zentralen Bereich des Fasses angeordnet ist und das Detektor-Array (62) so nahe wie möglich an einer Fasswand (19) angeordnet ist.

5. Fassanordnung nach einem der vorstehenden Ansprüche, **dadurch gekennzeichnet, dass** der Sensoraufnahmeabschnitt (4) ein Außengewinde (5) aufweist, mittels dessen das Sensormodul (16) in eine Gewindeöffnung des Fasses (15) gedreht ist.

6. Fassanordnung nach Anspruch 5, **dadurch gekennzeichnet, dass** das Außengewinde (5) einen Außendurchmesser aufweist, der in einem Bereich zwischen 25 und 28 mm liegt.

7. Fassanordnung nach einem der vorstehenden Ansprüche, **dadurch gekennzeichnet, dass** die Anordnung zumindest einen Mikrocontroller, eine wiederaufladbare Batterie, ein Drahtlos-Kommunikationsmodul, einen Speicher zum Speichern von Daten, einen Temperatursensor, einen Gyrosensor, eine LED, einen USB-Anschluss, eine Schnittstelle zum Anschluss einer Grafikdisplays sowie einen Manipulationsschutzschalter aufweist.

8. Fassanordnung nach einem der vorstehenden Ansprüche, **dadurch gekennzeichnet, dass** die Belüftungsöffnung des Fasses (15), in die das Sensormodul (16) gedreht ist, an einer oberen Seite des Fasses (15) angeordnet ist.

9. Fassanordnung nach einem der vorstehenden Ansprüche, **dadurch gekennzeichnet, dass** der Lasersensor zumindest einen Array-Detektor aufweist, der zumindest 3x3 Fotodetektoren aufweist.

10. Fassanordnung nach einem der vorstehenden Ansprüche, **dadurch gekennzeichnet, dass** das Fass (15) zumindest teilweise mit einer Flüssigkeit gefüllt ist, die aus der Gruppe ausgewählt ist, die aus Öl für Fahrzeuge, Motoröl, Getriebeöl, Schmiermitteln für Fahrzeuge und Kraftstoffen für Fahrzeuge besteht.

11. System zur Unterstützung der Fluidzufuhr, aufweisend zumindest eine Fassanordnung nach einem der vorstehenden Ansprüche und einen Zentralserver, der sich entfernt von der zumindest einen Fassanordnung befindet, wobei das Sensormodul (16) ferner ein Drahtlos-Kommunikationsmodul aufweist, wobei das Sensormodul (16) und der Zentralserver derart angeordnet und eingerichtet sind, um über das Drahtlos-Kommunikationsmodul miteinander kommunizieren.

12. Verfahren zur Unterstützung der Zufuhr einer Flüssigkeit, die in einem Fass einer Fassanordnung nach einem der Ansprüche 1 bis 10 gelagert wird, an einer Verbrauchsstelle, umfassend die folgenden Schritte:

    a) Messen des Füllstands des Fasses (15), das mit einer Flüssigkeit gefüllt ist, zu verschiedenen Zeitpunkten,
    b) Senden von Daten, die zumindest eine Kennung des Fasses (15) und den gemessenen Füllstand umfassen, über das Drahtlos-Kommunikationsmodul an einen Zentralserver,

c) Berechnen des in dem Fass (15) vorhandenen Flüssigkeitsvolumens auf Grundlage des gemessenen Füllstandes,

d) automatisches Bestellen von weiterer Flüssigkeit bei einem Flüssigkeitsanbieter, falls das berechnete Volumen unter einem vorgegebenen Schwellenwert liegt.

13. Verfahren nach Anspruch 12, **dadurch gekennzeichnet, dass** die an den Zentralserver gesendeten Daten zusätzlich einen Ort des Fasses (15) und/oder einen Typ der in dem Fass (15) gelagerten Flüssigkeit und/oder ein aus dem Fass (15) in einer definierten Zeitspanne entnommenes Flüssigkeitsvolumen und/oder eine Anzahl von Fassöffnungsvorgängen und/oder eine Anzahl von Sensormodulöffnungsvorgängen umfassen.

14. Verfahren nach Anspruch 12 oder 13, **dadurch gekennzeichnet, dass** die von der Fassanordnung an den Zentralserver zu sendenden Daten in einem Speicher des Sensormoduls (16) gespeichert werden, bis eine Kommunikationsverbindung zwischen dem Sensormodul (16) und dem Zentralserver hergestellt ist.

15. Verfahren nach einem der Ansprüche 12 bis 14, **dadurch gekennzeichnet, dass** die von dem Zentralserver empfangenen Daten ausgewertet werden, um einen Zeitpunkt vorherzusagen, an dem das in dem Fass (15) vorhandene Flüssigkeitsvolumen voraussichtlich unter den vorgegebenen Schwellenwert fällt, wobei in einem vordefinierbaren Zeitfenster vor dem vorhergesagten Zeitpunkt automatisch weitere Flüssigkeit bestellt wird.

**Revendications**

1. Dispositif de baril comprenant un baril pour stocker des liquides et un module de capteur (16) pour déterminer le niveau de remplissage du baril lorsqu'il est rempli d'un liquide, dans lequel le module de capteur (16) est connecté au baril (15) et comprend un boîtier de capteur (1), une partie de réception de capteur (4) agencée dans le boîtier de capteur (1), et un capteur laser (6) dans la partie de réception de capteur (4), dans lequel le capteur laser (6) fait face à un intérieur du baril (15), **caractérisé en ce que** le module de capteur (16) est tourné dans une ouverture d'aération du baril (15) qui est présente dans le baril (15) par défaut, dans lequel le module de capteur (16) comprend au moins un trou (8) à travers lequel de l'air peut s'écouler à partir d'un premier côté (41) du module de capteur (16) vers un second côté (42) du module de capteur (16) de sorte que de l'air puisse pénétrer à travers le module de capteur (16) et puisse s'écouler à partir d'un extérieur du système de baril vers un intérieur du baril (15) pour permettre que du liquide puisse être attiré à partir du baril (15) et que de l'air puisse s'écouler dans le baril (15) afin de remplacer le liquide retiré.

2. Dispositif de baril selon la revendication 1, **caractérisé en ce que** le capteur (6) comprend un élément émetteur de lumière (61) et un élément détecteur de lumière (62).

3. Dispositif de baril selon la revendication 2, **caractérisé en ce que** l'élément émetteur de lumière (61) et l'élément détecteur de lumière (62) sont agencés dans le même plan adjacents l'un à l'autre.

4. Dispositif de baril selon la revendication 2 ou 3, **caractérisé en ce que** l'élément émetteur de lumière (61) est une diode laser et l'élément détecteur de lumière (62) est un réseau de détection, dans lequel la diode laser (61) est située aussi près que possible d'une zone centrale du baril et le réseau de détection (62) est situé aussi près que possible d'une paroi de baril (19).

5. Dispositif de baril selon l'une quelconque des revendications précédentes, **caractérisé en ce que** la partie de réception de capteur (4) comprend un filetage externe (5) au moyen duquel le module de capteur (16) est tourné dans une ouverture filetée du baril (15).

6. Dispositif de baril selon la revendication 5, **caractérisé en ce que** le filetage externe (5) présente un diamètre externe compris entre 25 et 28 mm.

7. Dispositif de baril selon l'une quelconque des revendications précédentes, **caractérisé en ce qu'**il comprend au moins un parmi un microcontrôleur, une batterie rechargeable, un module de communication sans fil, une mémoire permettant de stocker des données, un capteur de température, un capteur gyroscopique, une LED, un port USB, une interface permettant de connecter une écran graphique, et un commutateur d'inviolabilité.

8. Dispositif de baril selon l'une quelconque des revendications précédentes, **caractérisé en ce que** l'ouverture d'aération du baril (15) dans laquelle le module de capteur (16) est tourné est agencée sur un côté supérieur du baril (15).

9. Dispositif de baril selon l'une quelconque des revendications précédentes, **caractérisé en ce que** le capteur laser comprend au moins un détecteur de réseau comprenant au moins 3x3 photodétecteurs.

**10.** Dispositif de baril selon l'une quelconque des revendications précédentes, **caractérisé en ce que** le baril (15) est au moins partiellement rempli d'un liquide choisi parmi le groupe composé d'huile pour véhicules, d'huile de moteur, d'huile d'engrenage, de lubrifiants pour véhicules et de carburants pour véhicules.

**11.** Système de support d'alimentation en fluide comprenant au moins un dispositif de baril selon l'une quelconque des revendications précédentes, et un serveur central situé à distance de l'au moins un dispositif de baril, dans lequel le module de capteur (16) comprend en outre un module de communication sans fil, dans lequel le module de capteur (16) et le serveur central sont agencés et conçus pour communiquer l'un avec l'autre au moyen du module de communication sans fil.

**12.** Procédé permettant de supporter l'alimentation d'un liquide stocké dans un baril d'un dispositif de baril selon l'une quelconque des revendications 1 à 10 au niveau d'un point de consommation, le procédé comprenant les étapes suivantes :

a) la mesure du niveau de remplissage du baril (15) rempli avec un liquide à différents moments,
b) l'envoi de données comprenant au moins une identification du baril (15) et le niveau de remplissage mesuré via le module de communication sans fil à un serveur central,
c) le calcul du volume de liquide présent dans le baril (15) sur la base du niveau de remplissage mesuré,
d) la commande automatique de liquide supplémentaire à partir d'un vendeur de liquide si le volume calculé est inférieur à un seuil prédéfini.

**13.** Procédé selon la revendication 12, **caractérisé en ce que** les données envoyées au serveur central comprennent en outre au moins un parmi un emplacement du baril (15), un type de liquide stocké dans le baril (15), un volume de liquide pris à partir du baril (15) dans une période définie, un nombre d'événements d'ouverture de baril, et un nombre d'événements d'ouverture de module de capteur.

**14.** Procédé selon la revendication 12 ou 13, **caractérisé en ce que** les données devant être envoyées à partir du dispositif de baril au serveur central sont stockées dans une mémoire du module de capteur (16) jusqu'à ce qu'une connexion de communication entre le module de capteur (16) et le serveur central soit établie.

**15.** Procédé selon l'une quelconque des revendications 12 à 14, **caractérisé en ce que** les données reçues par le serveur central sont évaluées pour prédire un moment auquel le volume de liquide présent dans le baril (15) chute vraisemblablement sous le seuil prédéfini, dans lequel du liquide supplémentaire est automatiquement commandé dans une fenêtre temporelle pouvant être prédéfinie avant le moment prédit.

Fig. 1A

Fig. 1B

Fig. 2A

Fig. 2B

Fig. 2C

Fig. 2D

Fig. 3A

Fig. 3B

Fig. 3C

Fig. 4

Fig. 5

Fig. 6A

EP 3 726 188 B1

Fig. 6B

EP 3 726 188 B1

Fig. 7A

EP 3 726 188 B1

Fig. 7B

Fig. 8A

Fig. 8B

**EP 3 726 188 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4782451 A
- US 6700503 B2
- WO 2005066592 A1
- US 20050289021 A1
- US 8079245 B1
- US 20100001867 A1
- US 20110000295 A1
- US 5648844 A